# EUROPEAN PATENT SPECIFICATION

(11) **EP 2 864 681 B1**
(45) Date of publication and mention of the grant of the patent: **01.06.2016**
(21) Application number: 13759004.8
(22) Date of filing: 20.06.2013
(51) Int. Cl.: F16L 1/18, F16L 1/225

(54) **LAYING RAMP AND RELATIVE OPERATING METHOD**
VERLEGERAMPE UND ENTSPRECHENDES BETRIEBSVERFAHREN
RAMPE DE POSE ET PROCÉDÉ DE FONCTIONNEMENT ASSOCIÉ

(30) Priority: 20.06.2012 IT MI20121084
(43) Date of publication of application: 29.04.2015
(73) Proprietor: Saipem S.p.A., San Donato Milanese (IT)
(72) Inventor: TURCONI, Alessandra, I-20097 San Donato Milanese (IT)
(74) Representative: Eccetto, Mauro
(86) International application number: PCT/IB2013/055076
(87) International publication number: WO 2013/190499

(56) References cited:
- WO-A1-2011/077238
- WO-A2-2011/086100
- US-A- 3 507 126
- US-A- 4 015 435

## Description

### TECHNICAL FIELD

The present invention relates to a laying ramp for laying a pipeline on the bed of a body of water.

### BACKGROUND ART

A laying ramp for laying a pipeline on the bed of a body of water normally comprises a frame hinged to a laying vessel to rotate about an axis of rotation; and at least one supporting device fitted to the frame to support the pipeline in a given configuration.

A laying vessel for laying a pipeline on the bed of a body of water normally comprises a floating body, which in turn comprises a pipeline assembly line, and is connected at the stern to the laying ramp, which defines an extension of the assembly line to lay the pipeline gradually onto the bed of the body of water as the laying vessel moves forward.

One method of producing and laying the pipeline is to assemble it on the assembly line and lay it using the laying ramp, which, in the work configuration, serves to support the pipeline along a path extending partly above and partly below water level. Between the laying vessel and the bed, pipelines laid using this method assume an S-shaped configuration, the radius of curvature of the two curves of which depends on the characteristics of the pipeline, the length and configuration of the laying ramp, and the depth of the body of water. This laying method can be used by various types of vessels, such as pontoons, barges, semisubmersibles and single-hull ships, depending on the depth of the bed, prevailing weather conditions, and the type of project. Pontoons and barges are the vessels most commonly used for laying pipelines in shallow water.

The laying ramp normally comprises a frame hinged at one end to the laying vessel, and which can assume various operating configurations, depending on the depth of the bed and the characteristics of the pipeline. Accordingly, the laying ramp is connected to the vessel by an actuating assembly known, for example, from documents US 4,257,718; WO 2008/149210; and WO 2009/098586 filed by the present Applicant. In the above documents, the second portion of the frame is fitted to and projects from arms connected to the laying vessel.

Given their size and structural design, the laying ramps and vessels described in US 4,257,718, WO 2008/149210 and WO 2009/098586 are obviously unsuitable for laying pipelines in shallow water, and particularly on beds of varying topography. More specifically, laying pipelines in shallow water calls for the use of vessels with a very small draught.

The weight of the pipeline and laying ramp may also impair the stability of the vessel, which is solved by supporting the free end of the laying ramp with variable-buoyancy floats, as described, for example, in documents US 4,030,311; US 3,670,511; US 3,606,759; US 3,538,712; and US 3,507,126.

The laying ramp described in these documents, however, is unsuitable for use in very shallow water with a bed of varying topography. Pipelines, in fact, sometimes have to be laid in water of an average depth of around 4 metres, with a bed varying, topographically between 1.5 and 20 metres, which would require very large controlled-buoyancy tanks; and, apart from their size and weight, operation of the tanks to adjust their depth would be incompatible with other pipeline laying operations.

Another drawback lies in the pipeline, in shallow water, forming two opposite curves along a relatively short length of the pipeline.

Moreover, all the above drawbacks are further aggravated as the specific weight of the pipeline increases.

Document US 3,280,571 describes a laying ramp comprising sledges fitted to the free end of the ramp and designed to rest on the bed of the body of water, and which provides for partly solving the above drawbacks.

The laying ramp described in US 3,280,571, however, is only suitable for use on certain types of beds, and cannot be moved in the opposite to laying direction without running the risk of the sledges becoming bogged down and moving the laying ramp out of line with respect to the laying vessel.

One technical solution proposed by the Applicant in WO 2011/077238 consists in supporting the free end of the laying ramp on a powered trolley designed to move along the bed or the body of water. In this case, however, the angle of the laying ramp with respect to the laying vessel is substantially defined by the topography of the bed of the body of water, which means the angles formed between the laying vessel, the laying ramp and the bed vary alongside variations in the topography of the bed, and may become critical enough to endanger the integrity of the pipeline as depth increases.

### DISCLOSURE OF INVENTION

One object of the present invention is to provide a laying ramp, for laying a pipeline on the bed of a body of water, designed to minimize the drawbacks of the known art, and in particular to operate effectively in shallow water with a bed of widely varying topography.

According to the present invention, there is provided a laying ramp for laying a pipeline on the bed of a body of water, the laying ramp comprising a telescopic frame, which extends along a longitudinal axis, is hinged to a laying vessel about an axis of rotation, and is movable selectively, in a direction parallel to the longitudinal axis, between a withdrawn configuration and an extended configuration, depending on the contour of the bed of the body of water.

The length of the laying ramp can thus be adjusted to adapt to the contour of the bed of the body of water without abandoning the pipeline on the bed. When working in very shallow water with a bed of varying topography, the laying ramp according to the present invention has the major advantage of greatly increasing laying efficiency and reducing stress on the pipeline.

In a preferred embodiment of the present invention, the telescopic frame comprises a first elongated structure having a first end hinged to the laying vessel about the axis of rotation, and a second end; and at least one second elongated structure connected to and slidable selectively with respect to the first elongated structure.

The laying ramp can thus be extended selectively by extracting the second elongated structure from the first.

The laying ramp preferably comprises an actuating device for moving the second elongated structure selectively with respect to the first elongated structure, and which is controlled from a remote station, preferably on board the laying vessel.

The length of the laying ramp can thus be controlled remotely.

The laying ramp preferably comprises a locking device for locking the second elongated structure in at least two given positions with respect to the first elongated structure, and which is controlled from a remote station, preferably on board the laying vessel.

said at least two given positions comprise a fully extracted position of the second elongated structure with respect to the first elongated structure, and a fully withdrawn position of the second elongated structure with respect to the first elongated structure.

The locking device preferably permits a plurality of lock positions with respect to said at least two given positions.

The laying ramp preferably comprises a third elongated structure connected to and slidable selectively with respect to the second elongated structure.

This solution permits further extension of the ramp.

The laying ramp preferably comprises a further actuating device for moving the third elongated structure selectively with respect to the second elongated structure; and a further locking device for locking the third elongated structure in at least two given positions with respect to the second elongated structure, and which is controlled from a remote station, preferably on board the laying vessel.

In a preferred embodiment, the laying ramp comprises a fourth elongated structure connected to the telescopic frame, at the opposite end to the axis of rotation.

The fourth elongated structure preferably comprises floating, preferably variable-buoyancy, members.

This makes it possible to adjust the angle of the laying ramp about the axis of rotation.

In a preferred embodiment of the present invention, the laying ramp comprises a supporting device for supporting the pipeline at the opposite end of the laying ramp to the axis of rotation.

The supporting device defines the last support of the pipeline before it is laid on the bed. Adjusting the telescopic frame adjusts the distance between the last support and the bed, i.e. the touchdown point of the pipeline on the bed.

The laying ramp preferably comprises a further supporting device mounted on the first elongated structure.

In other words, the laying ramp only comprises two selectively spaceable supporting points for supporting the pipeline along the ramp.

In a preferred embodiment of the present invention, the laying ramp comprises an actuator mounted on the laying vessel to rotate the telescopic frame about the axis of rotation.

This adjustment of the laying ramp about the axis of rotation is made to adjust the tilt of the ramp according to the length of the ramp and the contour of the bed of the body of water.

Another object of the present invention is to provide a method of operating a laying ramp.

According to the present invention, there is provided a method of operating a laying ramp for laying a pipeline on the bed of a body of water; the laying ramp comprising a telescopic frame extending along a longitudinal axis and hinged to a laying vessel about an axis of rotation; and the method comprising the step of selectively adjusting the length of the telescopic frame, in a direction parallel to the longitudinal axis, between a withdrawn configuration and an extended configuration, depending on the contour of the bed of the body of water.

The present invention provides for effectively supporting the pipeline, according to the contour of the bed of the body of water, quickly, cheaply and easily. More specifically, it is no longer necessary to abandon and recover the pipeline to adapt the ramp to the changing contour of the bed.

In a preferred embodiment of the present invention, the method comprises the step of locking the telescopic frame selectively in a given configuration from a remote station, preferably on board the laying vessel.

By means of the present invention, the length of the telescopic frame is locked remotely, thus speeding up the method.

In another preferred and advantageous embodiment of the present invention, the method comprises adjusting the tilt of the telescopic frame about the axis of rotation, as well as the length of the telescopic frame, to provide a plurality of configurations for effectively supporting the pipeline according to the contour of the bed of the body of water.

### BRIEF DESCRIPTION OF THE DRAWINGS

A non-limiting embodiment of the present invention will be described by way of example with reference to the attached drawings, in which :
Figure 1 shows a plan view, with parts removed for clarity, of a laying ramp, in accordance with the present invention, in a withdrawn configuration;
Figure 2 shows a side view, with parts removed for clarity, of the Figure 1 laying ramp;
Figure 3 shows a smaller-scale plan view, with parts removed for clarity, of the Figure 1 laying ramp in an extracted configuration;
Figure 4 shows a side view, with parts removed for clarity, of the Figure 3 laying ramp;
Figure 5 shows a larger-scale cross section, with parts removed for clarity, along line V-V in Figure 1;
Figure 6 shows a larger-scale cross section, with parts removed for clarity, along line VI-VI in Figure 3;
Figure 7 shows a larger-scale cross section, with parts removed for clarity, along line VII-VII in Figure 3;
Figure 8 shows a larger-scale cross section, with parts removed for clarity, along line VIII-VIII in Figure 3;
Figures 9 and 10 show larger-scale plan views, with parts removed for clarity, of two component parts of the Figure 3 laying ramp;
Figures 11 to 13 show schematic side views of the Figure 1 laying ramp in different operating configurations.

### BEST MODE FOR CARRYING OUT TIE INVENTION

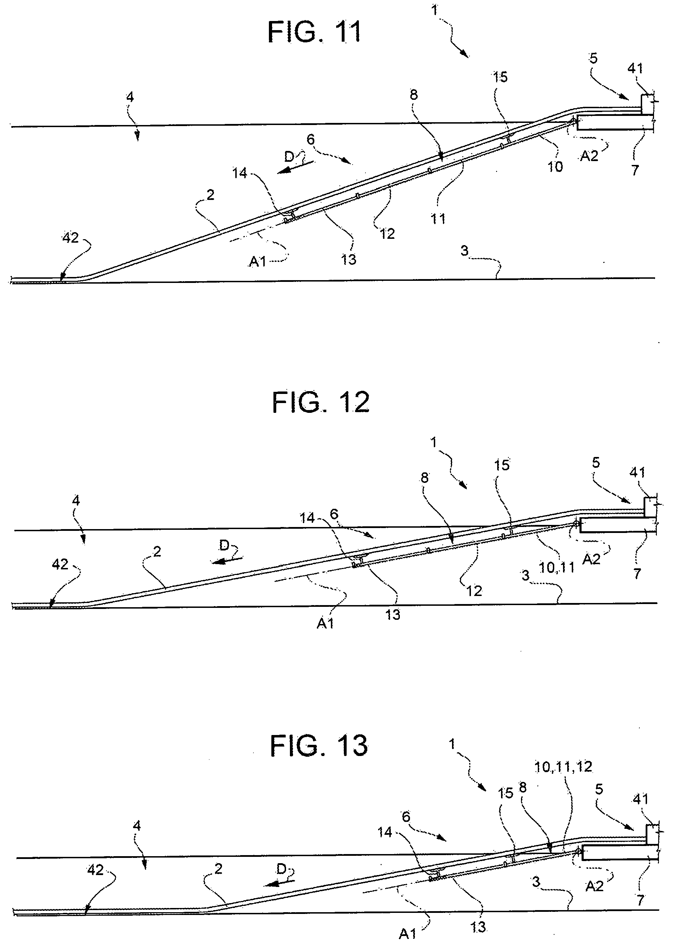

Number 1 in Figures 11 to 13 indicates as a whole a laying unit for laying a pipeline 2 on the bed 3 of a body of water 4.

Laying unit 1 comprises a laying vessel 5; and a laying ramp 6 connected to the stern of laying vessel 5.

Laying vessel 5 is preferably defined by a barge and comprises a shallow-draught hull 7 for operating in very shallow water; and an assembly line (not shown in the drawings) for assembling pipeline 2. In other words, as it is laid, pipeline 2 is fed in a feed direction D with respect to laying ramp 6, which serves to support at least one portion of pipeline 2. Laying ramp 6 extends along a longitudinal axis A1 parallel to feed direction D of pipeline 2.

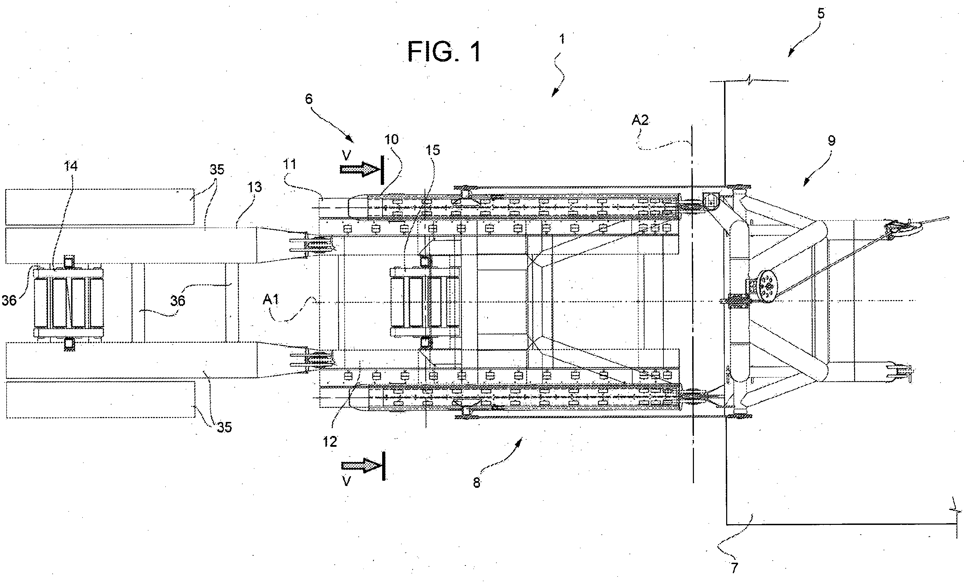

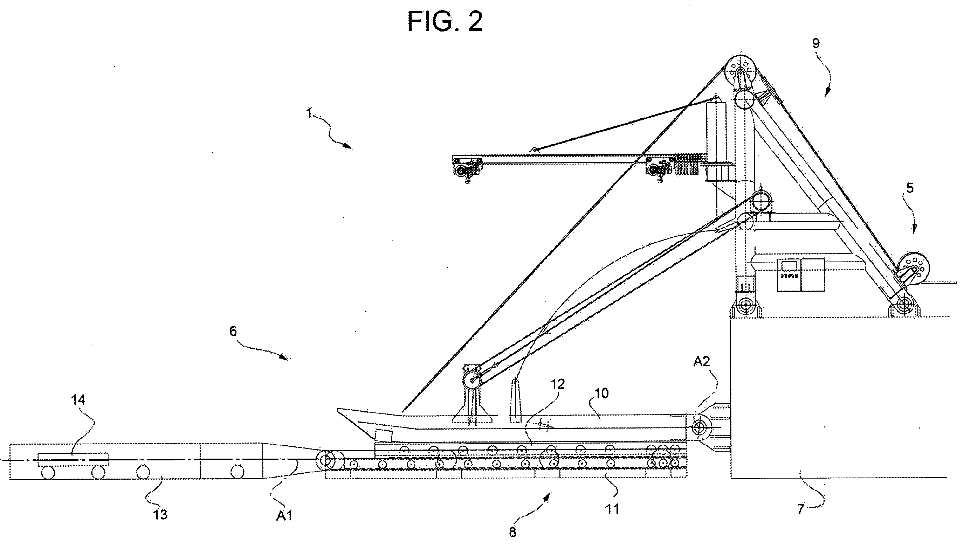

As shown more clearly in Figures 1 and 2, laying ramp 6 comprises a telescopic frame 8, which is hinged to laying vessel 5 about an axis of rotation A2 perpendicular to longitudinal axis A1, to selectively tilt laying ramp 6 with respect to the horizontal. Laying ramp 6 comprises an actuator 9 mounted at the stern of laying vessel 5 and connected to telescopic frame 8 to adjust the angle of telescopic frame 8 about axis of rotation A2.

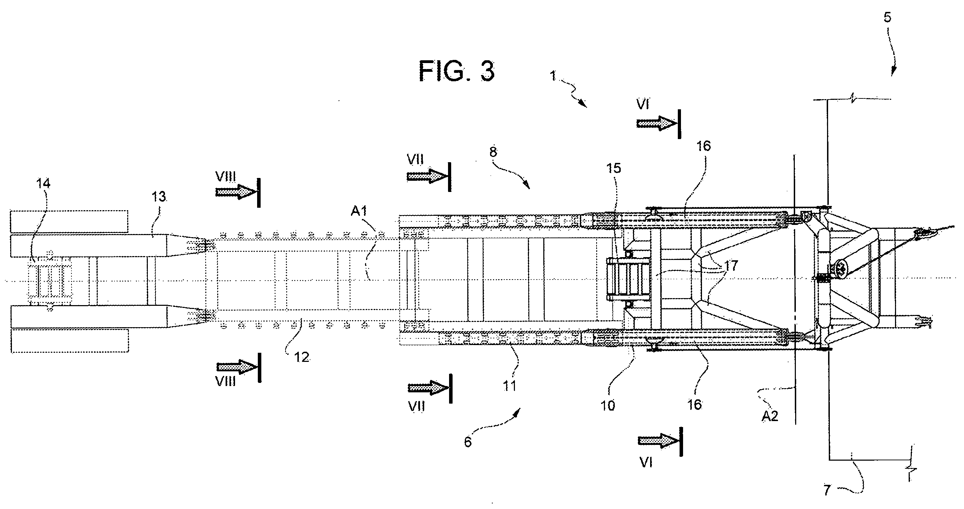

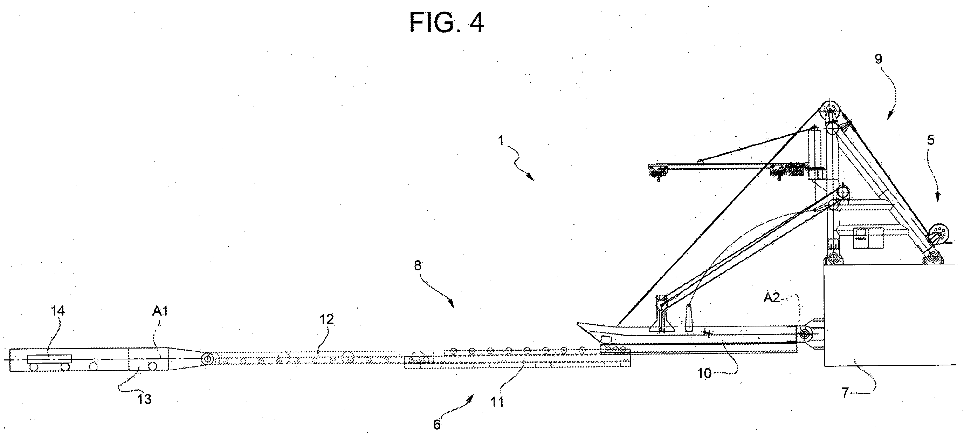

Telescopic frame 8 is movable selectively between a withdrawn configuration shown in Figures 1 and 2, and an extended configuration shown in Figures 3 and 4. Telescopic frame 8 generally comprises at least two elongated structures 10 and 11, and preferably three elongated structures, 10, 11 and 12, connected to and slidable with respect to each other in a direction parallel to longitudinal axis A1.

With reference to Figures 3 and 4, telescopic frame 8 comprises an elongated structure 10 having a first end hinged to laying vessel 5 about axis of rotation A2, and a second end; an elongated structure 11 connected to and slidable selectively with respect to elongated structure 10; and an elongated structure 12 connected to and slidable selectively with respect to elongated structure 11.

In the example shown, telescopic frame 8 is movable selectively from the Figure 1 and 2 withdrawn configuration to the Figure 3 and 4 extended configuration, depending on the contour of bed 3 of body of water 4, without abandoning pipeline 2 (Figures 11, 12 and 13). The extended configuration is substantially three times the length of the withdrawn configuration. Telescopic frame 8 may also assume intermediate lengths between those in Figures 1 to 4.

With reference to Figures 1 to 4, laying ramp 6 comprises a further elongated structure 13 extending substantially parallel to longitudinal axis A1 and connectable to telescopic frame 8, on the opposite side to laying vessel 5. Elongated structure 13 defines an extension of telescopic frame 8, and is preferably hinged to elongated structure 12 with the possibility of locking the articulated joint between structures 12 and 13.

With reference to Figure 3, laying ramp 6 comprises a supporting device 14 located at the free end of laying ramp 6 to support pipeline 2 (Figure 11). In the example shown, supporting device 14 is mounted on elongated structure 13.

Laying ramp 6 comprises a further supporting device 15 mounted on elongated structure 10.

In the example shown, the distance between supporting devices 14 and 15 is selectively adjustable by telescopic frame 8 as required, and in particular according to the contour of bed 3 (Figures 11-13).

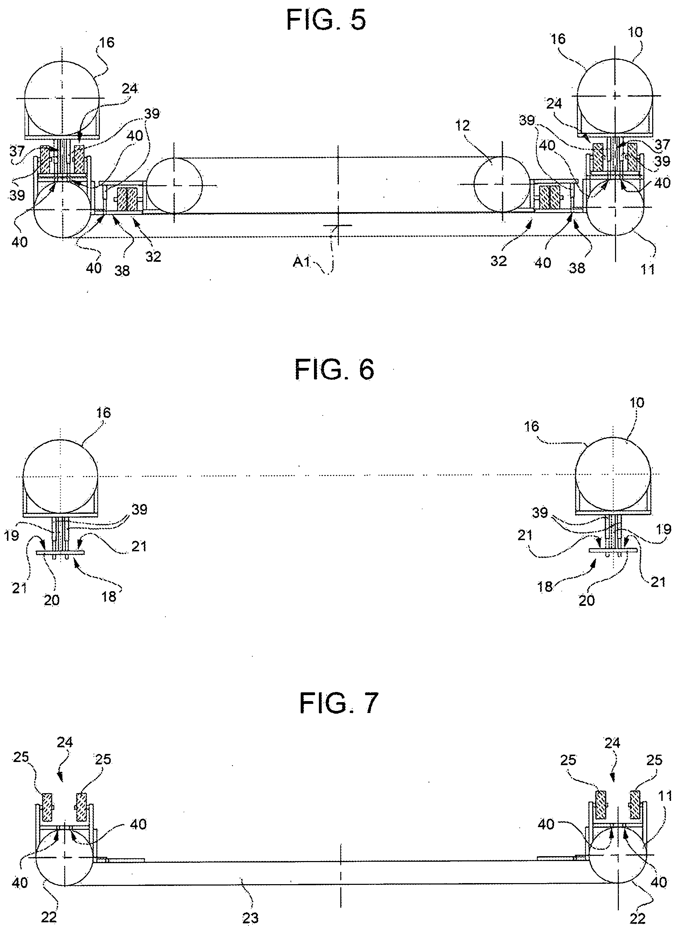

Construction-wise, as shown in Figure 5, elongated structures 10, 11 and 12 are connected to one another by a system of mutually engaging guides and trolleys. In the example shown, elongated structure 11 is suspended from and slidable selectively along elongated structure 10, and elongated structure 12 rests on and is slidable selectively along elongated structure 11.

With reference to Figure 3, elongated structure 10 comprises two longitudinal beams 16; cross members 17 connecting longitudinal beams 16; and two guides 18 (Figure 6) beneath longitudinal beams 16. With reference to Figure 6, each guide 18 comprises a web 19; and a bottom flange 20 symmetrical with web 19 and defining two - in the example shown, rolling - tracks 21.

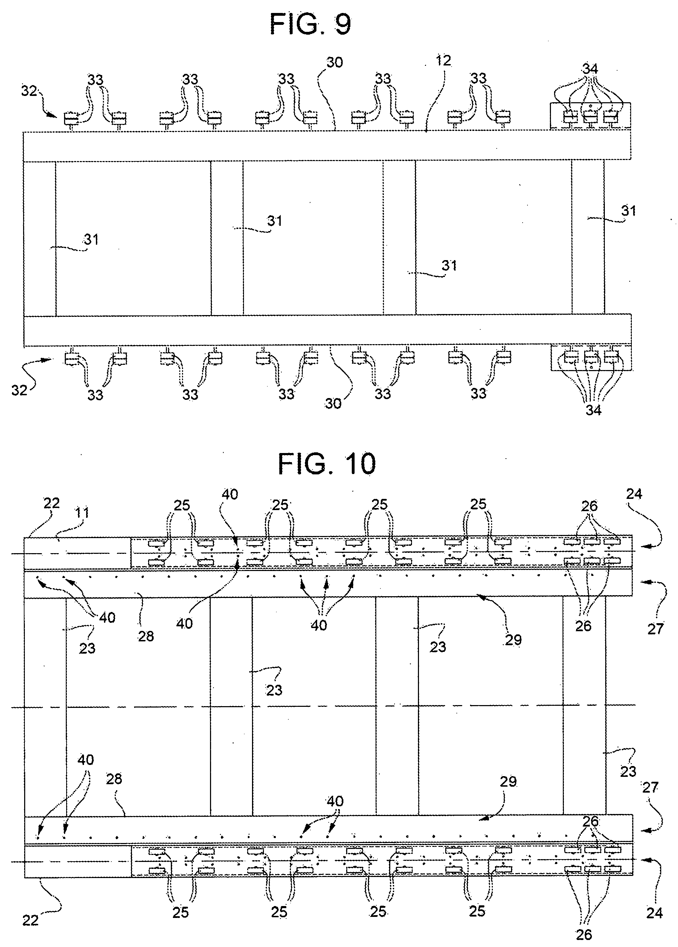

With reference to Figure 7, elongated structure 11 comprises two longitudinal beams 22; cross members 23 connecting longitudinal beams 22 (Figure 10); and two trolleys 24 on top of longitudinal beams 22.

With reference to Figure 10, each trolley 24 comprises two sets of idle wheels 25 and powered wheels 26 designed to roll along tracks 21 (Figure 6). Each set of wheels comprises idle wheels 25 and powered wheels 26. Powered wheels 26 are operated by an electric or pneumatic or hydraulic actuator (not shown in the drawings) controlled from a remote station preferably on board laying vessel 5 (Figure 3). Powered wheels 26 and the actuator (not shown) as a whole define an actuating device for moving elongated structure 11 selectively with respect to elongated structure 10.

Elongated structure 11 also comprises two guides 27 between longitudinal beams 22. Each guide 27 is adjacent to a respective longitudinal beam 22 and, in the example shown, comprises an angle iron 28 defining a track 29 for elongated structure 12.

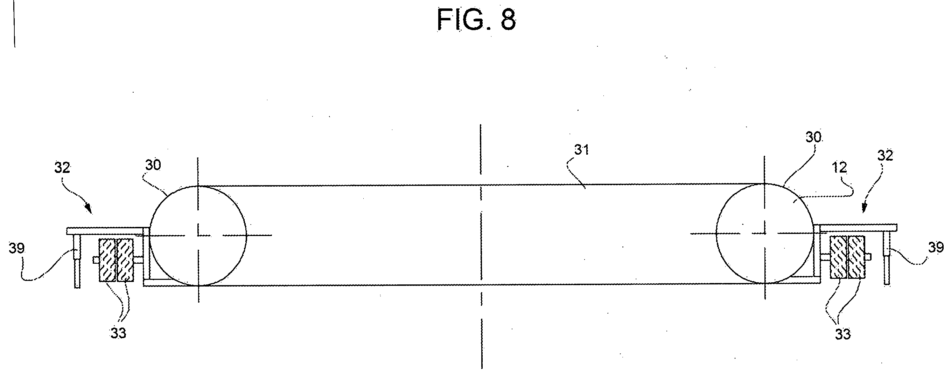

With reference to Figure 8, elongated structure 12 comprises two longitudinal beams 30; cross members 31 connecting longitudinal beams 30 (Figure 9); and two trolleys 32, each associated with a respective longitudinal beam 30.

With reference to Figure 9, each trolley 32 comprises a set of idle wheels 33 and powered wheels 34 designed to roll along tracks 29 (Figure 10). Each set of wheels comprises idle wheels 33 and powered wheels 34. Powered wheels 34 are operated by an electric or pneumatic or hydraulic actuator (not shown in the drawings) controlled from a remote station preferably on board laying vessel 5 (Figure 1).

Powered wheels 34 and the actuator (not shown) as a whole define an actuating device for moving elongated structure 12 selectively with respect to elongated structure 11.

With reference to Figures 1 to 4, elongated structure 13 comprises longitudinal floating members 35 connected by cross members 36. Floating members 35 are preferably of variable buoyancy to aid in adjusting the configuration of laying ramp 6.

With reference to Figures 5 to 7, laying ramp 6 comprises locking devices 37 and 38 for locking elongated structure 11 to elongated structure 10, and elongated structure 12 to elongated structure 11. Each locking device 37, 38 comprises pins 39, and holes 40 selectively engageable by pins 39..In the example shown, locking devices 37 are equally spaced along guides 18 and trolleys 24, and comprise pins 39 equally spaced along guides 18 of elongated structure 10, and holes 40 equally spaced along trolley 24 to lock elongated structure 11 in different positions with respect to elongated structure 10. Each pin 39 is activated hydraulically by an actuator not shown in the drawings.

Elongated structure 11 and elongated structure 10 can be fixed to each other in a plurality of relative positions by means of pins 39 insertable into a plurality of holes 40, so as to ensure the necessary structural rigidity of elongated structures 11 and 10, and define a plurality of configurations of laying ramp 6.

With reference to Figures 5 to 9, each locking device 38 has a plurality of pins 39 equally spaced along trolley 32 of elongated structure 12, and holes 40 equally spaced along track 29 of elongated structure 11, to lock elongated structure 12 in different operating positions with respect to elongated structure 11. Locking device 38 operates in the same way as locking device 37.

In actual use, and with reference to Figures 11 to 13, laying ramp 6 can assume different configurations, depending on the contour of bed 3 of body of water 4. The configurations of laying ramp 6 are achieved by adjusting the angle of laying ramp 6 about axis of rotation A2, and the length of telescopic frame 8. Both operations are operator-controlled from a remote station and, in the example shown, by a control unit 41 on board laying vessel 5. The angle of laying ramp 6 is determined by actuator 9 (Figures 1 to 4), which acts directly on elongated structure 10, and/or by variable-buoyancy floating members 35 of elongated structure 13.

In Figure 11, telescopic frame 8 and, therefore, laying ramp 6 are in the fully-extended configuration. In other words, elongated structures 11 and 12 are both fully extracted. And pipeline 2 is supported by supporting devices 14 and 15 along laying ramp 6, and by touchdown point 42 on bed 3 of body of water 4.

In Figure 12, bed 3 of body of water 4 is shallower than in Figure 11, and laying ramp 6 is set to an intermediate configuration, in which elongated structure 12 is fully extracted, and elongated structure 11 is fully withdrawn.

In Figure 13, bed 3 of body of water 4 is shallower than in Figure 12, and laying ramp 6 is set to a fully withdrawn configuration, in which elongated structures 11 and 12 are fully withdrawn and substantially superimposed on elongated structure 10.

The length of laying ramp 6 can thus be adjusted continuously, without abandoning the pipeline.

Clearly, changes may be made to the embodiment described of the present invention without, however, departing from the protective scope of the accompanying Claims.

## Claims

1. A laying ramp for laying a pipeline on the bed of a body of water, the laying ramp (6) comprising a frame (8), which extends along a longitudinal axis (A1), is hinged to a laying vessel (5) about an axis of rotation (A2), **characterised in that** the frame (8) is telescopic and is movable selectively, in a direction parallel to the longitudinal axis (A1), between a withdrawn configuration and an extended configuration, depending on the contour of the bed (3) of the body of water (4).

2. A laying ramp as claimed in Claim 1, wherein the telescopic frame (8) comprises a first elongated structure (10) having a first end hinged to the laying vessel (5) about the axis of rotation (A2), and a second end; and at least one second elongated structure (11) connected to and slidable selectively with respect to the first elongated structure (10).

3. A laying ramp as claimed in Claim 2, and comprising an actuating device for moving the second elongated structure (11) selectively with respect to the first elongated structure (10), and which is controlled from a remote station, preferably on board the laying vessel (5).

4. A laying ramp as claimed in Claim 2 or 3, and comprising a locking device (37) for locking the second elongated structure (11) in at least two given positions with respect to the first elongated structure (10), and which is controlled from a remote station, preferably on board the laying vessel (5).

5. A laying ramp as claimed in any one of Claims 2 to 4, and comprising a third elongated structure (12) connected to and slidable selectively with respect to the second elongated structure (11).

6. A laying ramp as claimed in Claim 5, and comprising a further actuating device for moving the third elongated structure (12) selectively with respect to the second elongated structure (11).

7. A laying ramp as claimed in Claim 5 or 6, and comprising a further locking device (38) for locking the third elongated structure (12) in at least two given positions with respect to the second elongated structure (11), and which is controlled from a remote station, preferably on board the laying vessel (5).

8. A laying ramp as claimed in any one of the foregoing Claims, and comprising a fourth elongated structure (13) connected to the telescopic frame (8), at the opposite end to the axis of rotation (A2).

9. A laying ramp as claimed in Claim 8, wherein the fourth elongated structure (13) comprises floating, preferably variable-buoyancy, members.

10. A laying ramp as claimed in any one of the foregoing Claims, and comprising a supporting device (14) for supporting the pipeline (2) and located at the opposite end of the laying ramp (6) to the axis of rotation (A2).

11. A laying ramp as claimed in any one of Claims 2 to 10, and comprising a further supporting device (15) mounted on the first elongated structure (10).

12. A laying ramp as claimed in any one of the foregoing Claims, and comprising an actuator (9) mounted on the laying vessel (5) to rotate the telescopic frame (8) about the axis of rotation (A2).

13. A method of operating a laying ramp for laying a pipeline on the bed of a body of water; the laying ramp (6) comprising a telescopic frame (8) extending along a longitudinal axis (A1) and hinged to a laying vessel (5) about an axis of rotation (A2); and the method comprising the step of selectively adjusting the length of the telescopic frame (8), in a direction parallel to the longitudinal axis (A1), between a withdrawn configuration and an extended configuration, depending on the contour of the bed (3) of the body of water (4).

14. A method as claimed in Claim 13, and comprising the step of locking the telescopic frame (8) selectively in a given configuration from a remote station, preferably on board the laying vessel (5).

15. A method as claimed in Claim 13 or 14, and comprising the step of adjusting the tilt of the telescopic frame (8) about the axis of rotation (A2).

16. A method as claimed in any one of Claims 13 to 15, wherein the steps claimed are performed with the pipeline on or off the laying ramp.

## Patentansprüche

1. Verlegerampe zum Verlegen einer Pipeline in dem Bett eines Gewässers, wobei die Verlegerampe (6) einen Rahmen (8) aufweist, welcher sich entlang einer Längsachse (A1) erstreckt und um eine Rotationsachse (A2) drehbar mit einem Verlegeschiff (5) verbunden ist, **dadurch gekennzeichnet, dass** der Rahmen (8) teleskopisch ist und abhängig vom Profil des Betts (3) des Gewässers (4) in einer Richtung parallel zur Längsachse (A1) wahlweise zwischen einer eingefahrenen Konfiguration und einer ausgefahrenen Konfiguration bewegbar ist.

2. Verlegerampe nach Anspruch 1, wobei der teleskopische Rahmen (8) eine erste längliche Struktur (10) mit einem ersten um die Rotationsachse (A2) gelenkig mit dem Verlegeschiff (5) verbundenen Ende und einem zweiten Ende und mindestens einer zweiten länglichen Struktur (11), die mit der ersten länglichen Struktur (10) verbunden und relativ zu dieser selektiv verschiebbar ist.

3. Verlegerampe nach Anspruch 2, umfassend eine Betätigungsvorrichtung zum selektiven Bewegen der zweiten länglichen Struktur (11) relativ zu der ersten länglichen Struktur (10), welche von einer entfernten, bevorzugt an Bord des Verlegeschiffes (5) befindlichen Station gesteuert wird.

4. Verlegerampe nach einem der Ansprüche 2 oder 3, umfassend eine Verriegelungseinrichtung (37) zum Verriegeln der zweiten länglichen Struktur (11) in mindestens zwei definierten Positionen relativ zu der ersten länglichen Struktur (10), welche von einer entfernten, bevorzugt an Bord des Verlegeschiffes (5) befindlichen Station gesteuert wird.

5. Verlegerampe nach einem der Ansprüche 2 bis 4, umfassend eine dritte längliche Struktur (12), die mit der zweiten länglichen Struktur (11) verbunden und relativ zu dieser bewegbar ist.

6. Verlegerampe nach Anspruch 5, umfassend eine weitere Betätigungsvorrichtung zum selektiven Bewegen der dritten länglichen Struktur (12) relativ zur zweiten länglichen Struktur (11).

7. Verlegerampe nach einem der Ansprüche 5 oder 6, umfassend eine weitere Verriegelungsvorrichtung (38) zum Verriegeln der dritten länglichen Struktur (12) in mindestens zwei definierten Positionen relativ zu der zweiten länglichen Struktur (11), welche von einer entfernten, bevorzugt an Bord des Verlegeschiffes (5) befindlichen Station gesteuert wird.

8. Verlegerampe nach einem der vorhergehenden Ansprüche, umfassend eine vierte längliche und mit dem teleskopischen Rahmen (8) verbundene Struktur (13) am der Rotationsachse (A2) entgegengesetzten Ende.

9. Verlegerampe nach Anspruch 8, wobei die vierte längliche Struktur (13) schwimmende Elemente mit vorzugsweise variablem Auftrieb aufweist.

10. Verlegerampe nach einem der vorhergehenden Ansprüche, umfassend eine Tragvorrichtung (14) zum Tragen der Pipeline (2), welche am der Rotationsachse (A2) entgegengesetzten Ende der Verlegerampe (6) angeordnet ist.

11. Verlegerampe nach einem der Ansprüche 2 bis 10, umfassend eine weitere Tragevorrichtung (15), die an der ersten länglichen Struktur (10) angebracht ist.

12. Verlegerampe nach einem der vorhergehenden Ansprüche, umfassend ein an dem Verlegeschiff (5) angebrachtes Stellglied (9) zum Rotieren des teleskopischen Rahmens (8) um die Rotationsachse (A2).

13. Verfahren zum Betrieb einer Verlegerampe zum Verlegen einer Pipeline in einem Bett eines Gewässers, wobei die Verlegerampe (6) einen sich entlang einer Längsachse (A1) erstreckenden und um eine Rotationsachse (A2) drehbar mit einem Verlegeschiff (5) verbundenen teleskopischen Rahmen (8) aufweist und das Verfahren den Schritt des wahlweisen Verstellens der Länge des teleskopischen Rahmens (8) abhängig von dem Profil des Betts (3) des Gewässers (4) in einer Richtung parallel zur Längsachse A1 zwischen einer eingefahrenen Konfiguration und einer ausgefahrenen Konfiguration umfasst.

14. Verfahren nach Anspruch 13, weiterhin umfassend den Schritt des wahlweisen Verriegelns des teleskopischen Rahmens (8) in einer definierten Position durch eine entfernte, bevorzugt an Bord des Verlegeschiffes (5) befindliche Station.

15. Verfahren nach einem der Ansprüche 13 oder 14, weiterhin umfassend den Schritt des Verstellens der Neigung des teleskopischen Rahmens (8) um die Rotationsachse (A2).

16. Verfahren nach einem der Ansprüche 13 bis 15, wobei die Schritte ausgeführt werden, während die Pipeline sich auf der Laderampe befindet oder sich nicht auf der Laderampe befindet.

## Revendications

1. Rampe de pose pour poser une canalisation sur le lit d'un corps d'eau, la rampe de pose (6) comprenant un cadre (8) qui s'étend le long d'un axe longitudinal (A1), est articulée à un navire de pose (5) autour d'un axe de rotation (A2), **caractérisée en ce que** le cadre (8) est télescopique et est mobile sélectivement dans une direction parallèle à l'axe longitudinal (A1) entre une configuration de retrait et une configuration d'extension selon le contour du lit (3) du corps d'eau (4).

2. Rampe de pose selon la revendication 1, dans laquelle le cadre télescopique (8) comprend une première structure allongée (10) présentant une première extrémité articulée au navire de pose (5) autour de l'axe de rotation (A2), et une seconde extrémité ; et au moins une deuxième structure allongée (11) reliée à la première structure allongée (10) et coulissant sélectivement par rapport à celle-ci.

3. Rampe de pose selon la revendication 2, et comprenant un dispositif d'actionnement pour le déplacement de la deuxième structure allongée (11) sélectivement par rapport à la première structure allongée (10) et qui est contrôlé par un poste distant, de préférence à bord du navire de pose (5).

4. Rampe de pose selon la revendication 2 ou 3, et comprenant un dispositif de verrouillage (37) pour le verrouillage de la deuxième structure allongée (11) dans au moins deux positions données par rapport à la première structure allongée (10) et qui est contrôlé par un poste distant de préférence à bord du navire de pose (5).

5. Rampe de pose selon l'une quelconque des revendications 2 à 4, et comprenant une troisième structure allongée (12) reliée à la deuxième structure allongée (11) et coulissant sélectivement par rapport à celle-ci.

6. Rampe de pose selon la revendication 5, et comprenant un autre dispositif d'actionnement pour le déplacement de la troisième structure allongée (12) sélectivement par rapport à la deuxième structure allongée (11).

7. Rampe de pose selon la revendication 5 ou 6, et comprenant un autre dispositif de verrouillage (38) pour le verrouillage de la troisième structure allongée (12) dans au moins deux positions données par rapport à la deuxième structure allongée (11) et qui est contrôlé par un poste distant, de préférence à bord du navire de pose (5).

8. Rampe de pose selon l'une quelconque des revendications précédentes, et comprenant une quatrième structure allongée (13) reliée au cadre télescopique (8) sur l'extrémité en regard de l'axe de rotation (A2).

9. Rampe de pose selon la revendication 8, dans laquelle la quatrième structure allongée (13) comprend des éléments flottants, de préférence à flottabilité variable.

10. Rampe de pose selon l'une quelconque des revendications précédentes, et comprenant un dispositif de support (14) pour le support de la canalisation (2) et situé sur l'extrémité en regard de la rampe de pose (6) par rapport à l'axe de rotation (A2).

11. Rampe de pose selon l'une quelconque des revendications 2 à 10, et comprenant un autre dispositif de support (15) monté sur la première structure allongée (10).

12. Rampe de pose selon l'une quelconque des revendications précédentes, et comprenant un actionneur (9) monté sur le navire de pose (5) pour tourner le cadre télescopique (8) autour de l'axe de rotation (A2).

13. Procédé de fonctionnement d'une rampe de pose pour la pose d'une canalisation sur le lit d'un corps d'eau ; la rampe de pose (6) comprenant un cadre télescopique (8) s'étendant le long d'un axe longitudinal (A1) et articulé à un navire de pose (5) autour d'un axe de rotation (A2) ; et le procédé comprenant l'étape d'ajustement sélectif de la longueur du cadre télescopique (8) dans une direction parallèle à l'axe longitudinal (A1) entre une configuration de retrait et une configuration d'extension selon le contour du lit (3) du corps d'eau (4).

14. Procédé selon la revendication 13, et comprenant l'étape de verrouillage du cadre télescopique (8) sélectivement dans une configuration donnée d'un poste distant, de préférence à bord du navire de pose (5).

15. Procédé selon la revendication 13 ou 14, et comprenant l'étape d'ajustement de l'inclinaison du cadre télescopique (8) autour de l'axe de rotation (A2).

16. Procédé selon l'une quelconque des revendications 13 à 15, dans lequel les étapes revendiquées sont réalisées avec la canalisation sur ou en dehors de la rampe de pose.
